# EUROPÄISCHE PATENTANMELDUNG

(11) **EP 3 709 381 A1**
(43) Veröffentlichungstag der Anmeldung: **16.09.2020**
(21) Anmeldenummer: 19162096.2
(22) Anmeldetag: 12.03.2019
(51) Int. Cl.: H01M 2/02, H02J 7/00

(54) **INTELLIGENTES THERMOMANAGEMENT IM BEREICH ELEKTROMOBILITÄT**

(71) Anmelder: ISOLITE GmbH, 67063 Ludwigshafen (DE)
(72) Erfinder: Knoll, Manuell, 69488 Birkenau (DE); Kühn, Manuel Peter, 67125 Darmstadt (DE); Pico, Davide, 76133 Karlsruhe (DE)
(74) Vertreter: Grünecker Patent- und Rechtsanwälte PartG mbB

(57) **Zusammenfassung**

System zum Schutz einer temperaturempfindlichen und umweltempfindlichen Komponente, beispielsweise eines Batteriesystems, einer Elektronikkomponente, eines Polymerbauteils, oder eines Elektromotors, umfassend: einen Innenaufbau aus mehreren Schichten, welcher einen Innenraum zur Aufnahme der zu schützende Komponente bildet; eine Außenhülle, welche den Innenaufbau umgibt; wobei der Innenaufbau mindestens vier Schichten in zwei Gruppen umfasst, wobei eine erste Gruppe eine erste Schicht , die eine Wärmeisolationsschicht ist, und eine zweite Schicht, die eine Brandschutzschicht ist, umfasst, und wobei eine zweite Gruppe eine dritte Schicht, die eine beheizbare Schicht ist, und eine vierte Schicht, die eine zum Wärmeabtransport geeignete Schicht ist, umfasst; wobei die erste Gruppe sich an der Außenhülle befindet und die zweite Gruppe sich unmittelbar am Innenraum befindet.

## Beschreibung

### Gebiet der Erfindung

Die Erfindung betrifft das Gebiet von Batterieeinhausungen und Kühlsystemen für umweltempfindliche Komponenten, insbesondere für Elektro- und Hybridfahrzeuge

### Hintergrund

### 1. Temperaturbetrachtung

Die Betrachtung der Temperatur einer Batterie/eines Akkumulators geht einher mit der Kapazität, allerdings ist hier Kapazität im Sinne eines Ladungsspeichervermögens gemeint, also jener Ladung, die der Akkumulator speichern kann. Das Ladungsspeichervermögen von Akkumulatoren in Amperestunden (Ah) wird zwar oft als deren (Nenn-)Kapazität bezeichnet, es hat jedoch weder etwas mit der elektrischen Kapazität (in Farad = Amperesekunde/Volt) noch mit der Leistungskapazität (in Watt) zu tun. Daher sollte man eher von Ladungsträgerkapazität oder Nennladung sprechen. Diese angegebene Ladungsträgerkapazität (Nennkapazität) bei einem Akku bezieht sich immer auf einen bestimmten Entladestrom und nimmt - je nach Akkumulatortyp unterschiedlich stark - mit höheren Entladeströmen ab. Allerdings stimmen diese Angaben nur bei Betrachtung der Bezugstemperatur, welche vom Hersteller angegeben ist meist ca. 20°C.

Die unterschiedlichen Temperaturzustände in einem Akkumulator gehen einher mit den chemischen Reaktionen in dem Akkumulator. Bei geringen Umgebungstemperaturen / Medientemperaturen laufen fast alle Reaktionen langsam und träge ab. Befindet sich der Akkumulator in kühlerem Gebiet als die Bezugstemperatur, so kann auch weniger Ladungsträgerkapazität abgegriffen werden.

Akkumulatoren werden als Energielieferant in der Elektromobilität herangezogen. Hierbei finden unter anderem verschiedenen Typen wie beispielsweise Bleibatterienkondensatoren, vor allem Doppelschichtkondensatoren, Nickel- Metallhydrid- und Nickel-Cadmium-Zellen sowie Zellen auf Zink-Luft- oder auch Nickel-Zink-Basis Anwendung. Sehr häufig werden Lithium-Ionen-Akkumulatoren verwendet. Die ideale Temperatur für den Gebrauch eines Lithium-Ionen-Akkumulators liegt bei etwa 20°C. Wie in der Temperaturbetrachtung beschrieben, ist die Leistung des Akkumulators abhängig von der Umgebungstemperatur. Je kälter es wird, desto träger werden die Ionen im Akkumulator, bis es schließlich zu einem Versagen des Akkumulators kommt. Diese untere Temperaturgrenze ist von Akku zu Akku verschieden und wird u.a. beeinflusst durch die einzelnen Materialien im Akkumulator vor allem durch Elektrolyte.

Das Temperaturverhalten von Akkumulatoren beruht auf physikalisch-chemischen Prozessen, wie beispielsweise die reversible Wärme von elektrochemischen Reaktionen. Diese stehen in unterschiedlicher Abhängigkeit zur Stromamplitude. Dieser Umstand macht ein Temperaturmanagement, auch Thermomanagement genannt, kompliziert. Grundsätzlich lässt sich sagen, dass ein Akkumulator eine Betriebstemperatur von wenigstens etwas über 0°C, bevorzugt über 5°C und idealerweise um die 20°C haben sollte. Umgekehrt sind zu hohe Temperaturen ebenfalls zu vermeiden. Thermisches Durchgehen, (engl. runaway), bezeichnet die Überhitzung einer exothermen chemischen Reaktion oder einer technischen Apparatur aufgrund eines sich selbst verstärkenden Wärme produzierenden Prozesses. Ein Durchgehen führt häufig zu Brand oder Explosion und bewirkt infolgedessen eine Zerstörung der Apparatur durch Überdruck, also Zerbersten. Um ein thermisches Durchgehen zu vermeiden, sind Temperaturen über 80°C zwingend auszuschließen. Je näher und gleichmäßiger die Temperatur der optimalen Betriebstemperatur von etwa 20°C ist, desto wirkungsvoller und besser ist dies für den Akkumulator.

### 2. Anforderungen

Der elektrifizierte Antriebsstrang inklusive der Batterien für Elektro- und Hybridfahrzeuge bestehen aus einer Vielzahl an Einzelkomponenten. Um diese kompakt im Fahrzeug zu verstauen ist eine Einhausung notwendig. Diese Einhausung dient nicht nur der Verstauung der einzelnen Batteriekomponenten, sondern sollte noch einige weitere Anforderungen erfüllen. Die Einzelkomponenten sollten positionssicher und verliersicher aufgenommen werden können. Des Weiteren dient die Einhausung an sich als Transportsicherheit des Akkumulators im Fahrzeug. Ggf. ist eine luftdichte Ausführung wünschenswert. Auf alle Fälle sollte die Einhausung aber chemikalienbeständig gegen die verwendeten Materialien im Akkumulator sein, also z.B. gegen Elektrolyte, Säuren etc. Eine schnelle und einfache Applikation im Fahrzeug hat eine hohe Priorität, um die Serienfähigkeit zur gewährleisten. Ebenso ist die Abschirmung der Spannungsquelle im Sinne eines Berührschutzes gegen elektrisch Leitfähige Komponenten, speziell im Bereich der Fahrzeugtechnik von großer Bedeutung (ECE R100 Regelung Nr. 100 der Wirtschaftskommission der Vereinten Nationen für Europa (UN/ECE) - Einheitliche Bedingungen für die Genehmigung der Fahrzeuge hinsichtlich der besonderen Anforderungen an den Elektroantrieb). Eine einfache De- bzw. Remontage ist ebenfalls förderlich. Aufgrund der Vielzahl an Fahrzeugtypen und Bauweisen muss sich das Konzept flexibel an Geometrien der verschiedensten Hersteller und deren Fahrzeugtypen anpassen lassen. Auch auf einer langen Lebensspanne sollte der Fokus mitunter liegen.

### Stand der Technik

Bekannte Lösungen für Packages für Akkumulatoren beinhalten unter anderen Pakete mit sehr vielen Einzelbefestigungen und Verschraubungen auf einer Platte oder aber Verschraubungen miteinander. Die Vielzahl an Befestigungen macht eine De- bzw. Remontierbarkeit komplex und zeitaufwendig und führt zu enormen Kosten und einem enormen Zeitaufwand.

Daher gibt es einige Ansätze die eine konkrete Umhüllung für den Akkumulator vorsehen. Diese Umhüllung, kurz Hülle genannt, ist meist in Kastenbauweise aus Metallen geformt, die geschweißt oder gekantet oder gelötet sind. Auch Tiefziehverfahren werden bei metallbasierten Aufbauten gerne verwendet. Beim Verschließen gibt es ebenfalls verschiedene Ansätze. Gelötete oder geschweißte Aufbauten sind i.d.R. nicht einfach de- bzw. remontierbar. Varianten mit deckelartigem Aufbau können je nach Anwendung verschraubt oder verschweißt werden und bieten hier eine höhere Variabilität.

Da metallbasierte Systeme in der Regel recht schwer sind und eine Batterie selbst je nach Größe und Typ zwischen 150 - 450 kg mit in das Elektrofahrzeug einbringen kann, sind Leichtbausysteme erstrebenswert. Hier gibt es diverse Ansätze über kunststoffbasierte Einhausungen beispielsweise mit Polyamiden und Polybutylenterephthalaten. Diese werden gerne im elektrischen Engineering benutzt, finden aber bereits häufig Anwendung im automobilen Sektor. Diese Bauteilkomponenten werden fast ausschließlich über Spritzguss hergestellt bei Massetemperaturen, d.h. Schmelze-Temperaturen, von 230 -270°C. Auch Verbindungsverfahren, wie das Ultraschall-, Reib-, Heizspiegel- und Heißgasschweißen sowie die Nutzung eines Reaktionsharzklebstoffes sind bei der Komplettierung diese Bauteile möglich.

Da das Thermomanagement eines Akkumulators sehr diffizil aber in höchstem Maße wichtig ist, werden gezielt Kühlsysteme für Akkumulatoren entwickelt.

Je nach Anwendungsfall des Fahrzeugs kann mit Spitzenleistungen von über 10 kW bis 100kW gerechnet werden. Dies sind Spitzenwerte, kontinuierliche Werte liegen in der Regel darunter. Dennoch ist die Anforderung an ein Thermomanagementsystem hier enorm. Vor allem im Punkte der Kühlung, wobei nicht die Kühlung alleine die Herausforderung darstellt, sondern die kontinuierliche und vor allen Dingen gleichmäßige Kühlung.

Für eine optimale Kühlung ist ein hervorragender thermischer Kontakt wichtig, damit eine gute Wärmeleitung ermöglicht wird. Gleichzeitig stellt sich die Herausforderung der elektrischen Isolation, welche prinzipiell erst einmal gegenläufige Ansätze verfolgen.

Im einfachsten Fall werden Fräsprofile herangezogen, die mit Kühlmitteln gefüllt sind oder in denen Kupferleitungen liegen, welche mit Kühlmittel gefüllt sind.

Ein weiterer Ansatz sind Kühlplatten, welche mit dem Akkumulator oder Energiespeichern auf zumindest einer Fläche so verbunden sind, dass ein thermischer Kontakt und damit eine Wärmeleitung ermöglicht wird. Auch Aufbauten mit mehreren Kühlplatten sind möglich. Die Kühlfluide sind meistens elektrisch isolierend. Gerne werden flüssige Fluide wie Silikonöle oder FCKWs verwendet, aber auch gasförmige Fluide wie beispielsweise Luft oder Edelgase. Eine Vortrocknung der Gase ist möglich. Damit wird die Kühlleistung erhöht.

### Beschreibung der Erfindung

Angesichts der Nachteile im Stand der Technik ist es Aufgabe der vorliegenden Erfindung, ein alternatives System zur Batterieeinhausung bzw. Kühlsystem für umweltempfindliche Komponenten bereitzustellen.

Die Erfindung stellt dazu bereit:
Ein System zum Schutz einer temperaturempfindlichen und umweltempfindlichen Komponente, beispielsweise eines Batteriesystems, einer Elektronikkomponente, eines Polymerbauteils, oder eines Elektromotors, umfassend: einen Innenaufbau aus mehreren Schichten, welcher einen Innenraum zur Aufnahme der zu schützende Komponente bildet; eine Außenhülle, welche den Innenaufbau umgibt; wobei der Innenaufbau mindestens vier Schichten in zwei Gruppen umfasst, wobei eine erste Gruppe eine erste Schicht, die eine Wärmeisolationsschicht ist, und eine zweite Schicht, die eine Brandschutzschicht ist, umfasst, und wobei eine zweite Gruppe eine dritte Schicht, die eine beheizbare Schicht ist, und eine vierte Schicht, die eine zum Wärmeabtransport geeignete Schicht ist, umfasst; wobei die erste Gruppe sich an der Außenhülle befindet und die zweite Gruppe sich unmittelbar am Innenraum befindet.

Das System dient zur Kapselung von temperaturempfindlichen sowie umweltempfindlichen Komponenten. Diese Komponenten können unter anderem ein Batteriesystem, Elektronickomponenten, Polymerbauteile, Komponenten mit entzündlichen Medien, Elektromotoren oder ähnliche Bauteile sein, welche einen Schutz vor Temperatur und Umwelteinflüssen bedarf. Der Innenaufbau besteht aus mehreren, mindestens aber vier Schichten, bei welchem jede Schicht eine besondere Eigenschaft aufweist. Die vier Schichten sind also typischerweise unterschiedlich. Es gibt keine Begrenzung der Anzahl der Schichten, wenn der Bauraum es zulässt. Die Schichtdicke beträgt typischerweise mindestens 1 mm.

In dem System können die Schichten innerhalb der Gruppen und/oder die Gruppen durch Trennlagen unterteilt sein.

Die Trennlagen oder Trennschichten dienen vornehmlich zur Unterteilung der Schichten innerhalb einer Gruppe oder aber zur Trennung der Gruppen voneinander.

In dem System können die Trennlagen Folien, Gewebe oder Netze aus ein oder mehreren aus Aluminium, duroplastischem Kunststoff, Edelstahl o.ä. sein.

In dem System kann die erste Schicht einen mikroporösen Dämmstoff, etwa ein Aerogel, insbesondere ein elastisch verformbares Aerogel umfassen.

Die erste Schicht im System besteht also beispielsweise aus einem Material mit extrem niedriger Wärmeleitfähigkeit, dies kann ein mikroporöser Dämmstoff sein, vorzugweise ein Aerogel, besonders ein elastisch verformbares Aerogel. Dies dient dem Zweck, das innere System weitgehend an einen Zustand der Adiabasie heranzuführen.

In dem System kann die zweite Schicht ein nicht elektrisch leitfähiges, nicht brennbares, bis wenigstens 1000 °C hochtemperaturbeständiges Material sein, beispielsweise aus ein oder mehreren aus einer Liste umfassend keramischen Materialien, einem Fasergewebe und einem Faservliesstoff.

Die zweite Schicht besteht also beispielsweise aus einem nicht elektrisch leitfähigen, hochtemperaturbeständigen (<1000°C), und nicht brennbaren Material. Dies kann eine Keramik, ein Fasergewebe, oder ein Faservliesstoff sein. Neben den genannten Eigenschaften unterstützt dieses Material auch das Vorhaben, die Wärmeleitfähigkeit gering zu halten. Ebenso besitzen die Materialien in genannter erster und zweiter Schicht jeweils eine sehr niedrige Wärmekapazität. Dadurch ist das System vor äußeren und inneren Temperaturschwankungen, welche unerwünscht sind, geschützt. Ebenso bietet die eingangs genannte Aluminiumfolie einen Schutz vor entweichender und eintreffender elektromagnetischer Strahlung.

In dem System kann die dritte Schicht ein integriertes Heizsystem, beispielsweise eine Infrarotheizung, eine Induktionsheizung oder einen elektrischen Heizleiter, etwa Heizdraht, Heizlitze, Carbonfaser, und einen elektrischen Isolator umfassen.

In dem System kann die dritte Schicht ferner einen mit Heizluft durchströmten Raum umfassen.

Die dritte Schicht beinhaltet also beispielsweise ein integriertes Heizsystem, dies Heizsystem kann je nach Anwendungsfall, z.B. Umgebungsluft, Festkörper usw., aus einer Infrarotheizung, einer Induktionsheizung oder insbesondere aus einem aus einem elektrischen Heizleiter, z.B.: Heizdraht, Heizlitze, Carbonfaser, und einem elektrischen Isolator bestehen. Ebenso ein mit Heizluft respektive Heißluft durchströmter Raum vorgesehen sein. Es versteht sich, dass dieser Raum nicht abgeschlossen ist, da sonst keine Zirkulation bzw. Durchströmen möglich wäre. Durch dieses Heizsystem kann im Inneren des Systems die Temperatur bei Bedarf angehoben und auf einem konstanten Niveau ohne große Wärmeverluste durch das besonders isolierte System gehalten werden.

In dem System kann die vierte Schicht zwei Trennlagen umfassen, welche einen variabel verstellbaren, schichtartigen Hohlraum umgeben, wobei der Hohlraum zur Wärmeabfuhr ausgebildet sein kann. Dabei können die Trennlagen der vierten Schicht jeweils eine höhere Wärmeleitfähigkeit besitzen als die jeweiligen Materialien der Trennlagen der ersten und/oder der zweiten Schicht.

Die beiden Trennlagen der vierten Schicht besitzen typischerweise eine gute Wärmeleitfähigkeit. Diese Wärmeleitfähigkeit der Trennlagen der vierten Schicht ist demnach beispielsweise höher oder gleich als die Wärmeleitfähigkeit der zu vergleichenden Schichten, d.h. der ersten oder zweiten Schicht.

In dem System kann der Hohlraum von einem Kühlmedium durchströmt werden, wobei als Kühlungsmedium insbesondere ein oder mehrere aus Luft, Wasser, oder Stickstoff dienen.

Die nächste, vierte, Schicht besteht aus typischerweise aus zwei Trennlagen, welche eine gute Wärmeleitfähigkeit besitzen und welche einen variabel verstellbaren Hohlraum zwischen sich bilden. Dieser variable Hohlraum kann auch im Falle der Nutzung des Heizsystems aus der Schicht vorher auf Kontakt gefahren werden. Dieser Hohlraum dient dazu, im benötigten Falle Wärme aus dem System abzuführen. Dies bedeutet: sollte die Temperatur im System zu hoch sein, kann dieser Hohlraum durch mit einem Kühlungsmedium durchströmt oder durchspült werden, um über die Oberfläche zum Inneren des Systems die Wärme abzuführen. Die Durchströmungsmedien, können Luft, Wasser, destilliertes Wasser, Stickstoff oder andere zum Wärmeabtransport geeignete Medien sein.

In dem System können zwischen den Schichten, insbesondere zwischen den Gruppen weitere Schichten zur Stabilisierung und / oder zur Aufnahme von kinetischer Energie, etwa im Crash-Fall, zum Schutz der inneren Komponente vor mechanischer Belastung und / oder Zerstörung vorgesehen sein, wobei diese weiteren Schichten insbesondere ein oder mehrere aus Sintergewebe, Metallgewebe, oder GFK umfassen.

Die vier Grundschichten des inneren Systems sind beliebig erweiterbar. Typischerweise wird man darauf achten, dass sich die erste und die zweite Schicht an der Außenhülle befinden und die dritte und die vierte Schicht unmittelbar vor dem Innenraum mit der zu schützenden Komponente. Dazwischen können sich weitere Schichten befinden unter anderem eine Schicht zur Stabilisierung und zur Aufnahme von kinetischer Energie z. B. im Crashfall um die innere Komponente vor mechanischer Belastung und vor Zerstörung zu schützen. Diese können Sintergewebe, Metallgewebe, GFK, oder ähnliche Schichten sein.

In dem System kann das System mindestens zwei Teile umfassen, die zum Schutz der Komponente mittels eines Verschlusssystems miteinander verschließbar und zur Wartung der Komponente voneinander lösbar sind, wobei das Verschlusssystem insbesondere ein oder mehrere aus einer Schraubenverbindung, einer Schnellverschlussverbindung oder einer Klipsverbindung umfassen kann.

Anstelle einer Klipsverbindung können auch dem Anwendungsfall entsprechende speziell entwickelte Verschlusssysteme eingesetzt werden.

In dem System kann ein Teil des Systems eine Bodenplatte aus Aluminium oder Kupfer oder ein Gestrick aus Kupfer und Aluminiumvlies umfassen, wobei das System ferner Seitenteile und einen Deckel umfassen kann, wobei die Seitenteile mit der Bodenplatte verbindbar und der Deckel auf die Seitenteile aufsetzbar sein kann, derart, dass die zu schützende Komponente eingehaust/umschlossen wird.

Das System kann also beispielsweise ein mindestens zweiteiliges System sein, das im geschlossenen Zustand die zu schützende Komponente umgibt und schützt. Die Zweiteilung ermöglicht es, das System problemlos öffnen zu können, so dass auch Wartungen an der oder den zu schützenden Komponenten durchgeführt werden können. Beispielsweise ist die Bodenplatte rechteckig oder quadratisch, es sind aber auch andere Formen möglich. Entsprechend folgen die Formen der Seitenteile und des Deckels der Form der Bodenplatte, um einen geschlossen Raum, der die Komponente schützt, durch Schließen des Systems erreichen zu können. Das Verschlusssystem basiert beispielsweise auf einer Schraubenverbindung, Schnellverschlussverbindung oder vorzugsweise aus einer Klipsverbindung oder ähnlichem. Die Bodenplatte wird beispielsweise im Hinblick das Gewicht des einzuhausenden Gegenstandes stabiler ausgeführt werden, dafür eignen sich ebenfalls Gebilde aus wärmeleitfähigen Materialien wie Aluminium oder Kupfer oder verschiedenen wärmeleitfähigen Güssen. Um Toleranzen der zu schützenden Bauteile auszugleichen und eine Kontaktfläche herzustellen, kann eine flexible Wärmeleipaste oder besser ein Gestrick auch Kupfer oder Aluminiumvlies oder ein eigens entwickelter Gapfiller verwendet werden.

In dem System kann die Außen- und Innenhülle definierte Zugänge zur Versorgung und/oder zur Analyse der zu schützenden Komponente und/oder zum Anschluss von Hilfsmitteln aufweisen.

In dem System kann die Außenhülle Duroplast oder einen Sheet Molding Compound-, SMC, Verbund, oder einen mehrlagigen Verbundaufbau umfassen, welcher eine Außenschicht aus einem Polyesterfaserstoff / oxidierte Polyacrylnitril, PES/panOX, Vlies eine erste Innenschicht aus Glas oder Steinwolle und eine zweite Innenschicht aus PES/panOX umfasst, wobei der mehrlagige Verbundaufbau durch ausgehärteten Phenolharz, etwa Phenoplasten, zusammengehalten wird.

In dem System kann die Außenhülle auf ihrer der zu schützenden Komponente abgewandten Seite mit glatter oder kalottierter Aluminiumfolie überzogen sein oder ein Aluminiumgehäuse aufweisen.

Die Außenhülle des Systems ist also typischerweise eine geschlossene Außenhülle mit definierten Zugängen zur zu schützenden Komponente oder für Anschlüsse von Hilfsmitteln um oben genannte Charakteristiken zu unterstützen. Die Außenhülle kann verschiedene Geometrien aufweisen, rechteckig, quadratisch, kugelförmig, oder in freiflächenform. Die Außenhülle besteht aus Kunststoff (Duroplast) oder einem SMC Verbund (Sheet Molding Compound) oder vorzugsweise aus einem mehrlagigen Verbundaufbau, welcher aus einer Außenschicht aus einem PES/panOX Vlies einer Innenschicht aus Glas oder Steinwolle und einer Innenschicht aus einem Vlies aus PES/panOX besteht bzw. umfasst. Dieser mehrlagige Verbundaufbau kann durch Aushärten von eingebrachtem Phenolharz, z.B. Phenoplasten, zusammen und in Form gehalten werden. Diese Außenhülle kann ebenfalls zum Schutz vor elektromagnetischer Strahlung mit glatter oder kalottierter Aluminiumfolie überzogen sein.

Im Folgenden werden Ausführungsformen der Erfindung unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

### Kurzbeschreibung der Figuren

Fig. 1 Schematische Ansicht eines Systems zum Schutz einer temperaturempfindlichen und umweltempfindlichen Komponente entsprechend der vorliegenden Offenbarung.
Fig. 2 Schematische Ansicht eines Systems zum Schutz einer temperaturempfindlichen und umweltempfindlichen Komponente, vergleichbar dem System aus Fig. 1, im geschlossenen Zustand.
Fig. 3 Schematische Ansicht des Systems gemäß Fig. 2 mit Innenansicht.
Fig. 4 Schematische Ansicht einer weiteren Ausführungsform eines Systems zum Schutz einer temperaturempfindlichen und umweltempfindlichen Komponente.
Fig. 5 Schematische Ansicht eines Teils eines Systems zum Schutz einer temperaturempfindlichen und umweltempfindlichen Komponente mit Trennschichten.
Fig. 6 Schematische Schnittansicht des Systems zum Schutz einer temperaturempfindlichen und umweltempfindlichen Komponente entsprechend der vorliegenden Offenbarung.

### Detaillierte Beschreibung

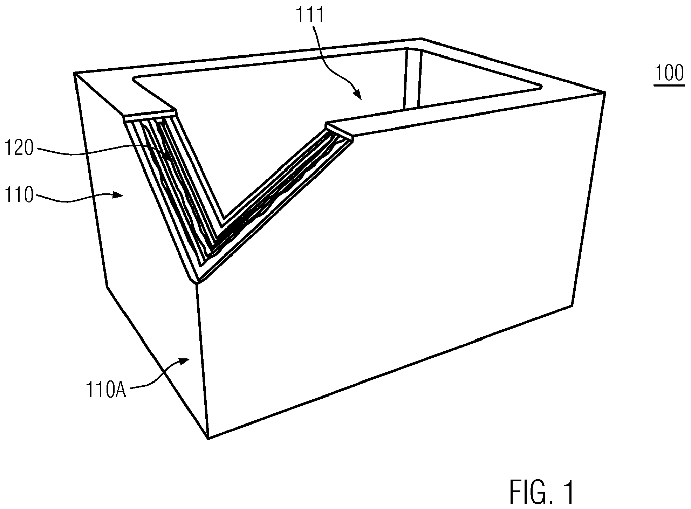

Die Figur 1 zeigt eine schematische Ansicht eines Systems 100 zum Schutz einer temperaturempfindlichen und umweltempfindlichen Komponente entsprechend der vorliegenden Offenbarung. Figur 1 zeigt schematisch das System 100 ohne Deckel, wobei es in dieser Darstellung lediglich um das Konzept und den Schichtaufbau geht. Das System 100 aus Figur 1 umfasst einen Innenbereich oder Innenraum 111, welcher von einem Innenaufbau 120 mit einem mehrschichtigen Schichtsystem umgeben ist. Der Innenaufbau 120 wird von einer Außenhülle 110 umgeben. Die Außenhülle 110 kann beispielsweise auf ihrer dem Innenraum 111 abgewandten Seite 110A mit glatter oder kalottierter Aluminiumfolie überzogen ist oder ein Aluminiumgehäuse aufweist. Falls nötig, kann die gesamte Innenfläche des Innenraumes 111 ebenfalls mit glatter oder kalottierter Aluminiumfolie überzogen werden. Bereits in der Figur 1 wie auch in den Systemen, die anhand der nachfolgenden, weiteren Figuren erläutert werden, ist die äußere Form des Systems 100 typischerweise kastenförmig oder boxartig bzw. würfelförmig. Es versteht sich, dass eine rechteckige, kastenförmige Form des Systems 100 nicht zwingend erforderlich ist, gleichwohl sie eine einfach zu realisierende Möglichkeit darstellt, eine temperatur- und/oder umweltempfindliche Komponente einzuhausen und zu schützen. Entsprechend der hier gezeigten rechteckigen, kastenförmigen Form hat das System sechs äußere Flächen, von denen bereits vier in Figur 1 sichtbar sind. Wichtig ist jedoch, dass das System ein abgeschlossenes Volumen schaffen kann, mit dem sich die zu schützende Komponente einhausen lässt.

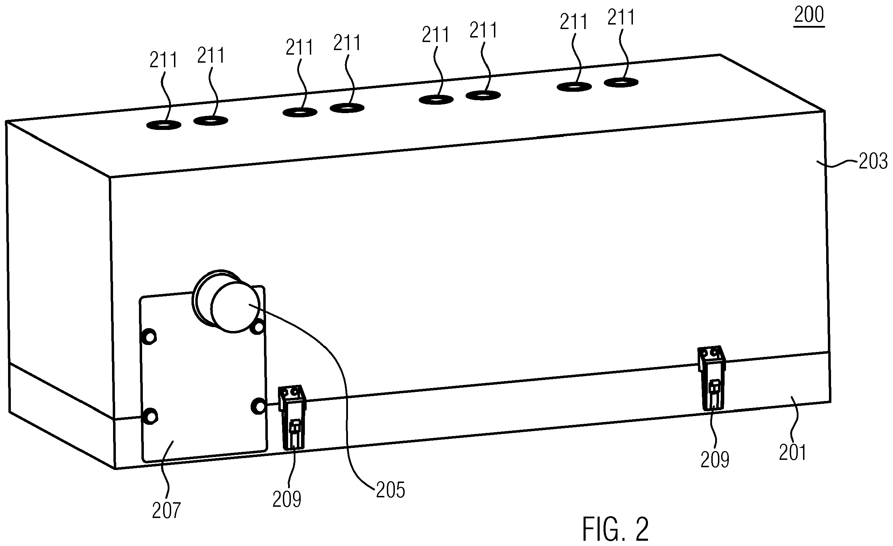

Die Figur 2 zeigt eine schematische Ansicht eines Systems 200 zum Schutz einer temperaturempfindlichen und umweltempfindlichen Komponente, vergleichbar dem System 100 aus Fig. 1, im geschlossenen Zustand. Ein geschlossener Zustand bedeutet für das System 200, dass eine zu schützende Komponente durch das System 200 vollständig umschlossen wird und folglich in Fig. 2 auch nicht zu sehen ist. Das System 200 in Fig. 2 umfassten einen Bodenbereich 203 und einen Deckelbereich 201. Dabei können die beiden Teile 201 und 203 des Systems 200, also der Bodenbereich 203 und der Deckelbereich 201, mittels eines Verschließsystems miteinander verbunden werden. Es versteht sich, dass das System 200 auch mehr als die beiden Teile 201 und 203 umfassen kann. Zum Schutz der Komponente können diese Teile mittels des Verschlusssystems 205, 207, 209 miteinander verschlossen werden. Beispielsweise zur Wartung der Komponente sind die Teile des Systems, also etwa die beiden Teile 201 und 203 wieder voneinander lösbar. Das Verschlusssystem 205, 207, 209 kann insbesondere eine Schraubenverbindung, eine Schnellverschlussverbindung oder eine Klipsverbindung umfassen, wobei diese Elemente auch miteinander kombiniert werden können. Das Element 207 stellt beispielsweise einen schraubbaren Einsatz beziehungsweise eine Kappe dar, der sich teilweise sowohl in das Deckelelement 201 als auch das Bodenelement 203 einpasst. Dieser ermöglicht einen Zugang zu der zu schützenden Komponente, ohne dass das Deckelteil 201 von dem Bodenteil 203 entfernt werden muss. Das Element 205 kann als Antriebssteuerung dienen, indem die zu schützenden Komponente mittels des Elementes 205 von außen, also bei geschlossenem System, steuerbar ist. Antrieb und Steuerung sind hier nicht gezeigt. In Figur 2 sind

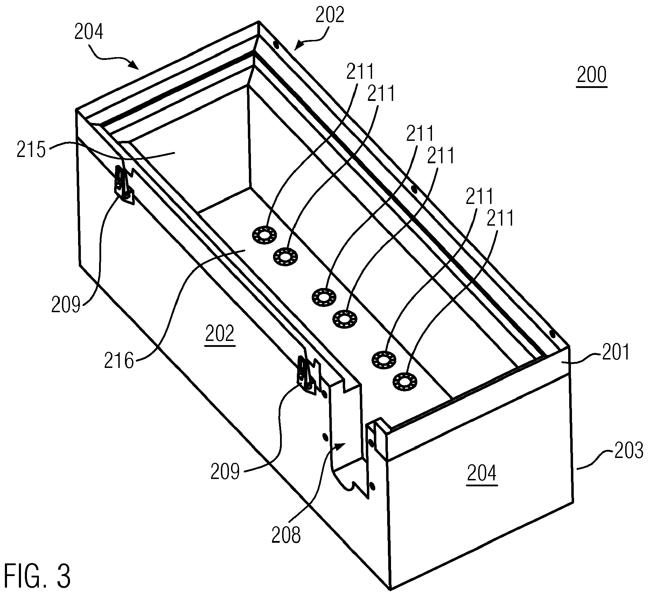

Die Figur 3 zeigt eine schematische Ansicht des Systems 200 gemäß Fig. 2 mit einer Innenansicht. In der Figur 3 sind jeweils dieselben Teile wie in Figur 2 mit denselben Bezugszeichen bezeichnet In Figur 3 ist also das Innere 215 des Systems 200 sichtbar. Dazu ist der Deckel 201 des Systems 200 ohne eine Deckelplatte, also offen, dargestellt worden. In Figur 3 ist das Element 207 aus Figur 2 nicht gezeigt, stattdessen ist eine Öffnung 208 gezeigt, in das sich das Element 207 aus Figur 2 einsetzen lässt. In Figur 2 ist eine Bodenplatte 216 gezeigt. Entsprechend der rechteckigen, kastenförmigen Form des System 200 sind in Figur 2 jeweils zwei Seitenteile 202 und 204 gezeigt, wobei der Kasten des Systems 200 in diesem Beispiel zwei gleichartige Seitenteile 202 und zwei gleichartige Seitenteile 204 aufweist, wobei die Seitenteile 204 an den Schmalseiten der rechteckigen Bodenplatte 216 ansetzen, während die Seitenteile 202 jeweils an den langen Seiten der rechteckigen Bodenplatte 216 ansetzen. Die Bodenplatte 216 kann aus Aluminium oder Kupfer sein oder ein Gestrick aus Kupfer und Aluminiumvlies umfassen. Die Seitenteile 202 und 204 sind mit der Bodenplatte 216 verbindbar und der Deckel 201 ist auf die Seitenteile 202 und 204 aufsetzbar ist, derart, dass die zu schützende Komponente eingehaust wird.

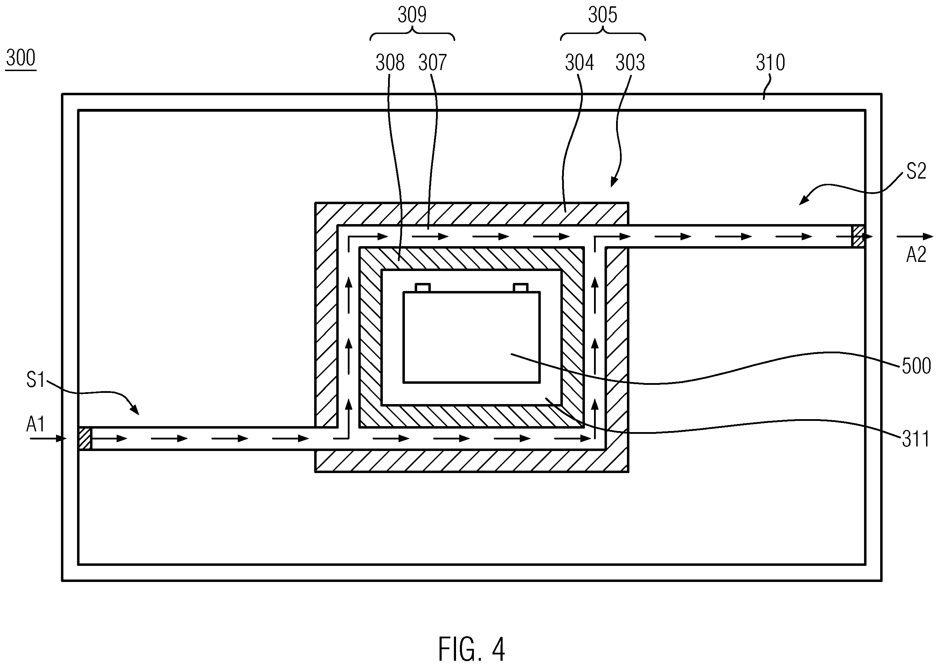

Die Figur 4 zeigt eine schematische Ansicht einer weiteren Ausführungsform eines Systems 300 zum Schutz einer temperaturempfindlichen und umweltempfindlichen Komponente 500. Die temperatur- und umweltempfindliche Komponente 500 ist in Figur 4 in einen Innenraum 311 platziert. Dieser Innenraum 311 wird von einem Schichtaufbau geschützt, wie nachfolgend diskutiert.

In der Figur 4 wird das System 300 von einer Außenhülle 310 umgeben. Die Außenhülle 310 kann Duroplast oder einen Sheet Molding Compound-, SMC, Verbund, oder einen mehrlagigen Verbundaufbau umfassen, welcher eine Außenschicht aus einem Polyesterfaserstoff / oxidierte Polyacrylnitril, PES/panOX, Vlies eine erste Innenschicht aus Glas oder Steinwolle und eine zweite Innenschicht aus PES/panOX umfasst, wobei der mehrlagige Verbundaufbau durch ausgehärteten Phenolharz, etwa Phenoplasten, zusammengehalten wird.

In Figur 4 wird umfängt bzw. umhüllt die Außenhülle 310 weitere, weiter innen liegende Schichten. Diese weiter innen liegenden Schichten sind dem Innenaufbau zuzurechnen. Die Außenhülle umfängt eine erste Gruppe 305 aus zwei Schichten 303 und 304 gezeigt. Die beiden Schichten 303 und 304 haben in der dargestellten Ausführungsform eine passive Funktion. Sie dienen beide der Dämmung, wobei die erste, äußere Schicht 303 der Adiabasie dient. Hier bedeutet "außen", dass diese Schicht weiter von zu schützenden Komponente entfernt ist als die übrigen Schichten dieser Gruppe und auch des Innenaufbaus. Die einzelnen Schichten kreuzen sich nicht, der Aufbau ist also im Prinzip einem Zwiebelschalenaufbau vergleichbar. Diese erste Schicht 303 kann beispielsweise aus einem Material mit extrem niedriger Wärmeleitfähigkeit bestehen, dies kann ein mikroporöser Dämmstoff sein, vorzugweise ein Aerogel, insbesondere ein elastisch verformbares Aerogel. Dies dient dem Zweck, das innere System weitgehend an einen Zustand der Adiabasie heranzuführen. Die zweite Schicht 304 liegt weiter innen als die erste Schicht 304. Diese Schicht 304 dient dem Brandschutz. In dem System 300 kann zweite Schicht 304 ein nicht elektrisch leitfähiges, nicht brennbares, bis wenigstens 1000 °C hochtemperaturbeständiges Material sein, beispielsweise aus ein oder mehreren aus einem keramischen Material, einem Fasergewebe und einem Faservliesstoff. Dies kann eine Keramik, ein Fasergewebe, oder ein Faservliesstoff sein. Neben den genannten Eigenschaften unterstützt dieses Material auch das Vorhaben, die Wärmeleitfähigkeit gering zu halten. Ebenso besitzen die Materialien in der ersten Schicht 303 und zweiten Schicht 304 jeweils eine sehr niedrige Wärmekapazität.

Die erste Gruppe 305 mit ihren Schichten 303 und 304 kann auch als eine Gruppe zum passiven Schutz der zu schützenden, umweltempfindlichen Komponente 500 angesehen werden, d.h. diese beiden Schichten 303 und 304, und damit die erste Gruppe 305 dienen dem Abschirmen der Komponente 500, insbesondere mit dem Ziel, Temperaturschwankungen und Temperaturaustausch mit dem Umgebung zu minimieren oder gar zu vermeiden. Das kann insbesondere der Fall sein, wenn sich die Temperatur außerhalb des Systems rasch ändert und zudem eine große Temperaturdifferenz gegenüber dem Innenraum 311 des Systems auftritt.

Figur 4 zeigt eine zweite Gruppe 309 von zwei Schichten, 307 und 308. Diese zweiter Gruppe 309 liegt weiter innen als die erste Gruppe 305, d.h. die zweite Gruppe 309 ist der zu schützenden Komponente 500 näher als die erste Gruppe 305. Die zweite Gruppe 309 umfasste eine dritte Schicht 307. Diese dritte Schicht 307 ist eine beheizbare Schicht. Die dritte Schicht 307 kann ein integriertes Heizsystem, beispielsweise eine Infrarotheizung, eine Induktionsheizung oder einen elektrischen Heizleiter, etwa Heizdraht, Heizlitze, Carbonfaser, und einen elektrischen Isolator umfassen.

In dem System 300 in Figur 4 umfasst die gezeigte dritte Schicht 307 einen mit Heizluft, d.h. insbesondere Heißluft, durchströmten Raum. In der Figur 4 ist ein Einlasskanal S1 gezeigt, in den beheizte bzw. heiße Luft in Pfeilrichtung gemäß dem Pfeil A1 eingelassen werden kann. Es versteht sich, dass der Kanal S1 durch alle Schichten, welche bezogen auf den Innenraum weiter außen liegen als die dritte Schicht 307, hindurchführt, um die dritte Schicht 307 mit Heizluft zu beheizen. Gleiches gilt für einen Kanal S2 zum Auslassen der Heizluft. Die Kanäle S1 bzw. S2 können den Zuführkanälen 211 aus den Figuren 2 und 3 entsprechend. Wie in Figur 4 weiter gezeigt, umfasst die dritte Schicht 307 einen Hohlraum, durch den die durch den Kanal S1 zugeführte Heizluft die vierte Schicht 308 und damit auch den Innenraum 311, in dem sich die Komponente 500 befindet, umströmen kann. Die Heizluft tritt nicht aus der dritten Schicht 307 aus. Es versteht sich, dass die Temperatur der Heizluft, die für das Durchströmen der dritten Schicht 307 verwendet wird, anwendungsbezogen gewählt werden kann. Die dritte Schicht 307 hat also eine aktive Temperaturstabilisierungsfunktion.

In dem System 300 in Figur 4 umfasst die zweite Gruppe eine weitere Schicht, die vierte Schicht 308. Die vierte Schicht 308 ist hier die am weitesten innen liegende Schicht, d.h. in Figur 4 umgibt sie unmittelbar den Innenraum 311 mit der Komponente 500. Die vierte Schicht kann insbesondere der Wärmeabfuhr und Gewährung der Temperaturstabilität dienen. D.h. während die dritte Schicht eine bestimmte Temperatur setzen kann, die insbesondere von außen durch Zufuhr von Heizluft mit einer vordefinierten Temperatur erreichbar ist, dient die vierte Schicht 308 dazu, dass es im Innenraum des Systems nicht zu heiß oder zu kalt wird. Die vierte Schicht 308 kann zwei Trennlagen umfassen, die einen variabel verstellbaren, schichtartigen Hohlraum umgeben, wobei dieser Hohlraum zur Wärmeabfuhr ausgebildet ist. Dabei kann dieser Hohlraum der vierten Schicht 308 von einem Kühlmedium durchströmt werden, wobei als Kühlungsmedium insbesondere ein oder mehrere aus Luft, Wasser, oder Stickstoff dienen können. In diesem Sinne ist auch die vierte Schicht 308 als aktive Schicht zu bezeichnen, d.h. als eine Schicht zur aktiven Temperaturstabilisierung des Systems 300 im Hinblick auf den Temperaturschutz für die zu schützende Komponente 500.

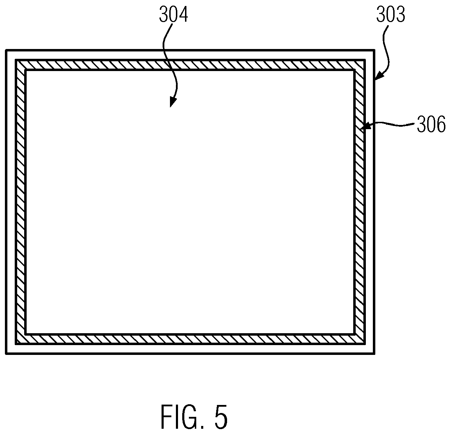

Die Figur 5 zeigt eine schematische Ansicht eines Teils des Systems 300 aus Fig. 4 zum Schutz einer temperaturempfindlichen und umweltempfindlichen Komponente, hier jedoch mit Trennlagen zwischen zwei Schicht. Konkret zeigt Fig. 5 die Schichten der ersten Gruppe, 303 und 304, zwischen denen eine Trennlage 306 vorgesehen ist. Es versteht sich, dass mehr als eine Trennlage verwendet werden können. Diese Trennlagen, etwa die Trennlage 306 kann Folien, Gewebe oder Netze aus ein oder mehreren aus Aluminium, duroplastischem Kunststoff, Edelstahl umfassen.

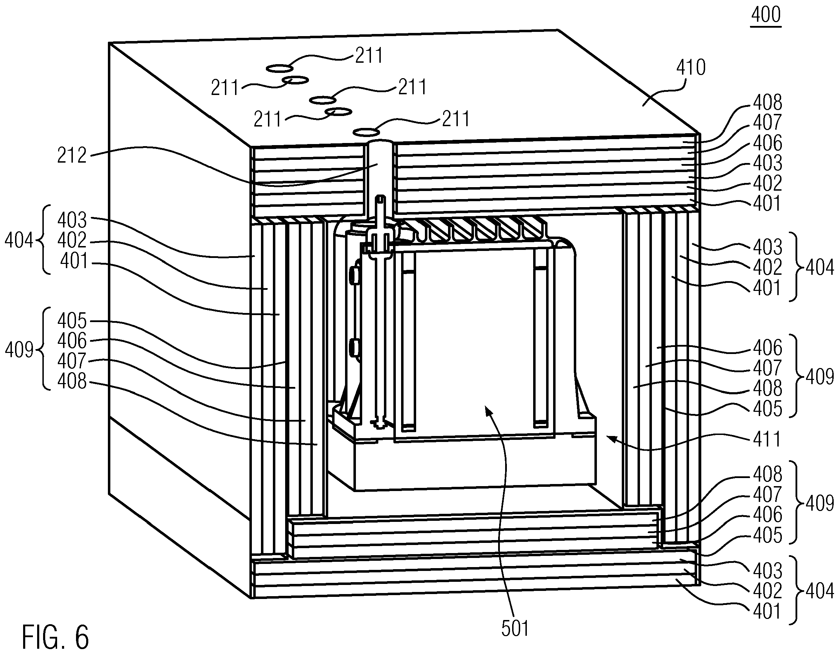

Die Figur 6 zeigt eine schematische Schnittansicht eines Systems 400 zum Schutz einer temperaturempfindlichen und umweltempfindlichen Komponente 501 entsprechend der vorliegenden Offenbarung. Die umweltempfindliche Komponente 501 kann der Komponente 500 aus Figur 5 entsprechen. In der Figur 6 sind Zuführkanäle 211 wie in den Figuren 2, 3 und 4 gezeigt. Diese Kanäle 211 gehen vom Innenraum 411 des Systems durch alle Schichten des Systems 400 hindurch, sogar durch die Außenhülle 410 des Systems. Diese Kanäle 211 können der Versorgung der Komponente 501 dienen, etwa für Flüssigkeiten etc. Die Komponente 501 befindet sich in Figur 6 in dem Innenraum 411, der zum Schutz der Komponente 501 von Gruppen mit Schichten umgeben ist, ähnlich wie bereits für die Fig. 4 erläutert. Figur 6 zeigt insbesondere, dass mehr als nur vier Schichten für die Umhausung zum Schutz der Komponente 501 verwendet werden können. In Figur 6 wird der Innenraum 411 des Systems 400 an drei Seiten von zwei Gruppen von Schichten umgeben, der inneren Gruppe 409 sowie der äußeren Gruppe 404. Die innere Gruppe 409 umfass die Schicht 405, die eine Luftschicht bzw. eine beheizbare Schicht sein kann. Die Schicht 405 umgibt die weiter innen liegenden Schichten 406, 407 und 408, wobei 408 die am weitesten innen liegende Schicht ist, also die Schicht, die den Innenraum 411 unmittelbar umgibt. Die Schichten 406, 407 und 408 können gleichartig sein oder verschiedenartig. Eine oder mehrere dieser Schichten 406, 407 und 408 kann eine aktive Temperaturstabilisierungsfunktion haben, vgl. die Schicht 308 aus Fig. 3.

Die äußere Gruppe 404 des Systems 400 in Fig. 4 umfasst drei weitere Schichten 401, 402, und 403, wobei die Schicht 401 die am weitesten außenliegende Schicht dieser Gruppe ist und die Schicht 403 die am weitesten innen liegende Schicht dieser Gruppe ist. Diese Schichten 401, 402 und 403 können in ihrer Funktion den Schichten 303 und 304, vgl. Fig. 3, entsprechen. D.h. mindestens eine der Schichten 401, 402 und 403 ist eine Brandschutzschicht, beispielsweise die Schicht 403, die der Schicht 304 aus Fig. 3 ähneln kann. Ferner ist mindestens eine weitere der drei Schichten 401, 402 und 403 eine Schicht aus einem mikroporösen Dämmstoff, vorzugweise ein Aerogel, besonders ein elastisch verformbares Aerogel, im Hinblick darauf, das System weitgehend an einen Zustand der Adiabasie heranzuführen.

Der von den Kanälen 211 durchzogene obere Teil der Einhausung des Systems 400 weist wiederum die Schichten 401, 402, 403, 406, 407, 408 auf, wobei die Luftschicht 405 hier nicht explizit gezeigt ist.

Es gilt also: Die Vorteile des Systems gemäß der Figuren 3 und 6 liegen in folgenden Punkten:
- Es handelt sich um ein sehr leichtes System. Die verwendeten Komponenten haben ein minimales Gewicht
- Es wird die Wärmeleitfähigkeit des Systems in Teilbereichen des Systems minimiert, insbesondere im Bereich von Temperaturen von -70 bis 150°C
- Es wird die Wärmeleitfähigkeit des Systems in anderen Teile des Systems maximiert, in insbesondere im Bereich im Bereich von Temperaturen von -70 bis 150 °C
- Das System besitzt eine hohe Elektromagnetische Abschirmwirkung.
- Das System lässt sich bei Bedarf exakt temperieren.
- Das System ist geschützt gegen Brand
- Das System stellt die Möglichkeit einer hohen Aufnahme von kinetischer Energie im Crashfall, beispielsweise bei einem Fahrzeugcrash, bereit.
- Das System ist weitestgehend resistent gegen Säuren und Basen.
- Das System besitzt eine hohe Dichtigkeit.
- Das System dehnt sich bei Wärmzufuhr nur unwesentlich aus, es weist eine minimale Wärmeausdehnung auf.

## Patentansprüche

1. System (100, 200, 300, 400) zum Schutz einer temperaturempfindlichen und umweltempfindlichen Komponente (500, 501), beispielsweise eines Batteriesystems (500, 501), einer Elektronikkomponente, eines Polymerbauteils, oder eines Elektromotors, umfassend:
einen Innenaufbau (120) aus mehreren Schichten, welcher einen Innenraum (215, 311, 411) zur Aufnahme der zu schützende Komponente bildet;
eine Außenhülle (110, 310, 410), welche den Innenaufbau umgibt;
wobei der Innenaufbau (120) mindestens vier Schichten in zwei Gruppen umfasst, wobei eine erste Gruppe (305, 404) eine erste Schicht (303, 403), die eine Wärmeisolationsschicht ist, und eine zweite Schicht (304, 401, 402), die eine Brandschutzschicht ist, umfasst, und wobei eine zweite Gruppe (309, 409) eine dritte Schicht (307, 405), die eine beheizbare Schicht ist, und eine vierte Schicht (308, 406, 407, 408), die eine zum Wärmeabtransport geeignete Schicht ist, umfasst;
wobei die erste Gruppe (305, 404) sich an der Außenhülle (110, 310, 410) befindet und die zweite Gruppe (309, 409) sich unmittelbar am Innenraum befindet.

2. System (100, 200, 300, 400) gemäß Anspruch 1, wobei die Schichten innerhalb der Gruppen (305, 404, 309, 409) und/oder die Gruppen (305, 404, 309, 409) durch Trennlagen (306) unterteilt sind.

3. System (100, 200, 300, 400) gemäß Anspruch 2, wobei die Trennlagen (306) Folien, Gewebe oder Netze aus ein oder mehreren aus Aluminium, duroplastischem Kunststoff, Edelstahl sein können.

4. System (100, 200, 300, 400) gemäß einem der Ansprüche 1 - 3, wobei die erste Schicht (303, 403) einen mikroporösen Dämmstoff, etwa ein Aerogel, insbesondere ein elastisch verformbares Aerogel umfasst.

5. System (100, 200, 300, 400) gemäß einem der Ansprüche 1 - 4, wobei die zweite Schicht (304, 401, 402) ein nicht elektrisch leitfähiges, nicht brennbares, bis wenigstens 1000°C hochtemperaturbeständiges Material ist, beispielsweise ein oder mehrere aus einem keramischen Material, einem Fasergewebe und einem Faservliesstoff.

6. System (100, 200, 300, 400) gemäß einem der Ansprüche 1 - 5, wobei die dritte Schicht (307, 405) ein integriertes Heizsystem, beispielsweise eine Infrarotheizung, eine Induktionsheizung oder einen elektrischen Heizleiter, etwa Heizdraht, Heizlitze, Carbonfaser, und einen elektrischen Isolator umfasst.

7. System (100, 200, 300, 400) gemäß Anspruch 6, wobei die dritte Schicht (307, 405) ferner einen mit Heizluft durchströmten Raum umfasst.

8. System (100, 200, 300, 400) gemäß einem der vorherigen Ansprüche, wobei die vierte Schicht (308, 406, 407, 408) zwei Trennlagen (306) umfasst, die einen variabel verstellbaren, schichtartigen Hohlraum umgeben, wobei der Hohlraum zur Wärmeabfuhr ausgebildet ist; wobei die Trennlagen der vierten Schicht jeweils eine höhere oder gleiche Wärmeleitfähigkeit besitzen als jeweils Materialien der Trennlagen der ersten und/oder der zweiten Schicht.

9. System (100, 200, 300, 400) gemäß Anspruch 8, wobei der Hohlraum von einem Kühlmedium durchströmt wird, wobei als Kühlungsmedium insbesondere ein oder mehrere aus Luft, Wasser, oder Stickstoff dienen.

10. System (100, 200, 300, 400) gemäß einem der vorherigen Ansprüche, wobei zwischen den Schichten, insbesondere zwischen den Gruppen weitere Schichten zur Stabilisierung und / oder zur Aufnahme von kinetischer Energie, etwa im Crash-Fall, zum Schutz der inneren Komponente vor mechanischer Belastung und / oder Zerstörung vorgesehen sind, wobei diese weiteren Schichten insbesondere ein oder mehrere aus Sintergewebe, Metallgewebe, oder GFK umfassen.

11. System (100, 200, 300, 400) gemäß einem der vorherigen Ansprüche, wobei das System (100, 200, 300, 400) mindestens zwei Teile (201, 203) umfasst, die zum Schutz der Komponente (500, 501) mittels eines Verschlusssystems (205, 207, 209) miteinander verschließbar und zur Wartung der Komponente (500, 501) voneinander lösbar sind, wobei das Verschlusssystem (205, 207, 209) insbesondere ein oder mehrere aus einer Schraubenverbindung, einer Schnellverschlussverbindung oder einer Klipsverbindung umfasst.

12. System (100, 200, 300, 400) gemäß Anspruch 11, wobei ein Teil des Systems eine Bodenplatte (216) aus Aluminium oder Kupfer oder ein Gestrick aus Kupfer und Aluminiumvlies umfasst, wobei das System (100, 200, 300, 400) ferner Seitenteile (202, 204) und einen Deckel (201) umfasst, wobei die Seitenteile (202, 204) mit der Bodenplatte (216) verbindbar und der Deckel (201) auf die Seitenteile (202, 204) aufsetzbar ist, derart, dass die zu schützende Komponente (500, 501) eingehaust wird.

13. System (100, 200, 300, 400) gemäß einem der vorherigen Ansprüche, wobei die Außen- und Innenhülle definierten Zugänge (211) zur Versorgung und/oder zur Analyse der zu schützenden Komponente und/oder zum Anschluss von Hilfsmitteln aufweisen.

14. System (100, 200, 300, 400) gemäß einem der vorherigen Ansprüche, wobei die Außenhülle (110, 310, 410) Duroplast oder einen Sheet Molding Compound-, SMC, Verbund, oder einen mehrlagigen Verbundaufbau umfasst, welcher eine Außenschicht aus einem Polyesterfaserstoff / oxidierte Polyacrylnitril, PES/panOX, Vlies eine erste Innenschicht aus Glas oder Steinwolle und eine zweite Innenschicht aus PES/panOX umfasst, wobei der mehrlagige Verbundaufbau durch ausgehärteten Phenolharz, etwa Phenoplasten, zusammengehalten wird.

15. System (100, 200, 300, 400) gemäß einem der vorherigen Ansprüche, wobei die Außenhülle (110, 310, 410) auf ihrer der zu schützenden Komponente (500, 501) abgewandten Seite (110A) mit glatter oder kalottierter Aluminiumfolie überzogen ist oder ein Aluminiumgehäuse aufweist.
